# FASCICULE DE BREVET EUROPEEN

(11) **EP 3 925 738 B1**
(45) Date de publication et mention de la délivrance du brevet: **10.05.2023**
(21) Numéro de dépôt: 21177124.1
(22) Date de dépôt: 01.06.2021
(51) Int. Cl.: B25J 15/04, B23Q 1/00, B25J 19/00, B25J 11/00

(54) **EQUIPEMENT, NOTAMMENT D'USINAGE**
AUSSTATTUNG, INSBESONDERE ZUR MASCHINENBEARBEITUNG
EQUIPMENT, IN PARTICULAR FOR MACHINING

(30) Priorité: 17.06.2020 FR 2006304
(43) Date de publication de la demande: 22.12.2021
(73) Titulaire: Le Creneau Industriel, 74940 Annecy-le-Vieux (FR)
(72) Inventeur: BOTTON, Bruno, 74150 HAUTEVILLE SUR FIER (FR); FRARIER, Benjamin, 74370 VILLAZ (FR)
(74) Mandataire: Croonenbroek, Thomas Jakob

(56) Documents cités:
- JP-A- 2001 300 729
- JP-A- 2017 064 879

## Description

La présente invention concerne un équipement destiné à effectuer des opérations, des tâches automatisées, notamment d'usinage, sur au moins une pièce.

L'usinage peut être un fraisage, un perçage, un multi-perçage, ou tout autre procédé d'enlèvement de matière. Il peut s'agir avantageusement d'usinage de précision sur des pièces de formes complexes, par exemple au moins en partie concaves, convexes, ou coniques, ou multi-matériaux ou encore d'épaisseurs différentes.

Différentes applications peuvent être envisagées, notamment en construction mécanique.

En particulier, dans le domaine aéronautique, une application peut être l'usinage de plaques acoustiques pour nacelles d'avion, pour la réalisation de dispositifs de réduction du bruit, tels que des résonateurs de Helmholtz, permettant de réduire le bruit des turboréacteurs logés dans les nacelles.

Les nacelles sont de forme générale tubulaire, ou plus spécifiquement présentent des sections de forme conique ou tronconique.

Les plaques acoustiques sont généralement réalisées en composite carbone, aluminium, titane, inconel. Elles présentent une multitude de trous de petit diamètre, répartis de façon à procurer un effet d'absorption acoustique des bruits générés par les turboréacteurs. Afin de créer des résonateurs Helmholtz avec un impact efficace sur l'absorption acoustique, la répartition des trous dans la plaque acoustique est très importante et influe de façon significative sur le niveau de bruit généré par le turboréacteur.

Cependant, une telle plaque acoustique ne peut être perforée qu'après avoir été mise en forme préalablement. Il en résulte que la plaque acoustique présente généralement une surface de forme conique, tronconique, concave, convexe ou complexe (avec des zones concaves et des zones convexes). Pour parvenir à une absorption acoustique efficace, optimisée, il est nécessaire que le positionnement précis des trous réalisés, soit respecté dans des limites assez restreintes, même sur de telles formes complexes.

De façon générale, l'équipement, notamment d'usinage, comprend une machine permettant de réaliser au moins une opération, telle qu'une opération d'usinage, au moyen d'un effecteur correspondant. L'effecteur est aussi nommé agrégat dans le domaine particulier de l'usinage du bois.

On entend par machine, aussi bien une machine-outil, une machine cartésienne, qu'un robot industriel articulé, poly-articulé. Une machine cartésienne utilise un système de coordonnées cartésiennes et évolue généralement avec des mouvements linéaires, tandis qu'un robot articulé, poly-articulé, utilise un système de coordonnées polaires, et présente au moins un bras susceptible de pivoter autour d'un axe d'articulation.

La machine ou le robot comprend au moins un bras et une interface à l'extrémité de ce bras sur laquelle peut directement être accouplé un effecteur ou porte-outil par exemple pour une opération d'usinage. Voir par exemple les documents JP2001300729 et JP2017064879.

En particulier, le document JP2001300729 décrit un robot de soudage 61 sur lequel peuvent être fixées de manière interchangeable deux équipements de soudage 20, 40, dédiés au soudage de deux pièces W1, W2 différentes. Chaque équipement comporte un bras 22b, 42b portant une torche de soudage 22, 42 et une structure de serrage 80A, 80B, le tout formant un ensemble unitaire qui vient s'accoupler sur une partie de fixation 70 en extrémité du bras de robot 61a.

Cependant cette solution ne s'applique que pour un unique type d'opération qui est le soudage. Et, les structures de serrage 80A, 80B intégrées à chaque équipement, ne permettent pas d'accoupler un ou plusieurs effecteurs différents au bras de robot afin d'augmenter les possibilités d'opérations qui peuvent être mises en oeuvre par le robot.

L'opération ou procédé, notamment d'usinage, peut être exigeant, c'est-à-dire demandeur en termes de précision, et/ou d'accès sur la pièce et/ou d'évolution de la machine ou du robot.

Les machines, en particulier les machines-outils sont souvent encombrantes et peu flexibles d'utilisation. En effet, une machine-outil est généralement conçue et dédiée pour une seule application, et ne peut donc pas être réutilisée facilement pour une autre application. De même, les robots industriels sont généralement destinés à une seule application.

Cependant, la charge que représente cette application dédiée n'est parfois pas suffisante pour amortir la machine, le robot. Une fois que la machine, le robot, est en place, il est intéressant de pouvoir réaliser un maximum d'opérations.

Par ailleurs, les machines (robots) sont alimentées en énergie électrique par un système d'alimentation en énergie comprenant un faisceau de câbles traversant une gaine d'alimentation qui relie un panneau d'alimentation ou une armoire de commande à la machine, en particulier à l'extrémité d'un bras d'un robot.

Pour un procédé donné, l'accastillage ou gaine d'alimentation comprenant le faisceau interne de câbles d'alimentation peut être optimisé, dimensionné spécifiquement pour alimenter en énergie la machine (le robot) pour l'opération dédiée. Cet accastillage peut être plus ou moins encombrant selon les besoins en énergie du procédé concerné.

Cependant, pour un procédé exigeant, notamment d'usinage, par exemple pour lequel un robot doit évoluer avec précision, un accastillage encombrant et lourd peut limiter l'évolution du robot, dans son envergure d'action et la flexibilité des postures, pour atteindre la pièce par exemple à usiner.

De plus, l'accastillage ou gaine d'alimentation exerce des contraintes sur le bras du robot (de la machine), ce qui peut engendrer une dégradation de la précision de suivi de trajectoire et la précision de positionnement.

L'invention a pour objectif de s'affranchir des inconvénients précités pour garantir une trajectoire dans l'espace avec une grande précision et une stabilité. L'invention a encore pour objectif d'augmenter la flexibilité d'utilisation de telles machines (robots) et ainsi leur rentabilité.

À cet effet, l'invention a pour objet un équipement, notamment d'usinage, comprenant une machine présentant au moins un bras, et comprenant au moins un premier effecteur configuré pour être accouplé à une extrémité libre du bras. Selon l'invention, l'équipement est modulable. Il comporte :
a. une interface principale configurée pour être portée par l'extrémité libre du bras et configurée pour être accouplée au premier effecteur,
b. au moins une interface secondaire configurée pour être accouplée à l'interface principale, et
c. au moins un deuxième effecteur configuré pour être accouplé à ladite au moins une interface secondaire et à l'interface principale.

De plus, l'équipement comporte au moins un système d'alimentation en énergie configuré pour alimenter ladite au moins une interface secondaire.

Ainsi, la solution proposée permet une mutualisation d'opérations possibles en utilisant une même machine (ou robot) tout en ajustant les besoins en énergie.

La modularité obtenue grâce à une ou plusieurs interfaces secondaires qui viennent s'intercaler entre l'interface principale et un effecteur, permet d'adapter la machine selon les opérations à effectuer en fonction de l'envergure d'action nécessaire, de l'énergie nécessaire, tout en limitant les contraintes / efforts exercés sur le bras, et permet en outre de pourvoir répondre à des nouveaux besoins.

En effet, une telle solution permet notamment de travailler directement avec l'interface principale par exemple pour une première opération, un premier procédé ou process, nécessitant un apport en énergie plus faible (que d'autres) pour lequel le système d'alimentation (en particulier la gaine et le faisceau interne) peut être optimisé tout en satisfaisant les exigences d'évolution, d'accès sur pièce et de précision.

Pour des opérations ou procédés supplémentaires, par exemple qui peuvent être plus consommateurs en termes de besoin d'énergie, mais qui peuvent éventuellement nécessiter moins de précision ou moins d'évolution du robot, une interface secondaire peut être assemblée sur l'interface primaire et porter un effecteur additionnel correspondant.

L'équipement peut en outre comporter une ou plusieurs caractéristiques suivantes décrites ci-après, prises séparément ou en combinaison.

L'interface principale est montée fixe sur l'extrémité libre du bras.

L'interface principale est configurée pour assurer une fonction de mise en référence des interfaces secondaires et/ou des effecteurs, ainsi qu'une fonction de verrouillage des effecteurs.

L'interface principale peut comporter des connecteurs électriques et/ou mécaniques avec les différents effecteurs.

Selon un premier principe d'utilisation, l'équipement n'a pas toujours recours à l'utilisation d'une interface secondaire additionnelle, et l'interface principale peut être directement accouplée au premier effecteur.

L'interface principale est configurée pour être assemblée directement avec le premier effecteur, lorsqu'une opération associée au premier effecteur doit être réalisée. Ceci est en particulier avantageux lorsque l'opération associée au premier effecteur est exigeante en termes de précision, et/ou d'accès sur la pièce et/ou d'évolution de la machine.

L'interface principale est de plus configurée pour être assemblée avec une interface secondaire couplée à un deuxième, troisième, et ainsi de suite, effecteur, lorsqu'une autre opération associée à cet effecteur doit être réalisée.

L'interface secondaire est destinée à être disposée entre un effecteur associé et l'interface principale.

L'équipement peut comporter autant d'interfaces secondaires que nécessaire.

Une interface secondaire peut être associée à un ou plusieurs effecteurs, ce qui permet d'augmenter encore la flexibilité d'utilisation.

Selon un deuxième principe d'utilisation, une interface secondaire est utilisée pour toutes les opérations. Une interface secondaire est donc intercalée entre l'interface principale et un effecteur correspondant, pour toutes les opérations.

Dans ce cas, le premier effecteur est configuré pour être également accouplé à une interface secondaire, l'interface secondaire étant disposée entre le premier effecteur et l'interface principale.

Lorsque l'équipement comporte au moins deux interfaces secondaires, pour chaque interface secondaire, l'équipement comporte un système d'alimentation en énergie associé.

Les interfaces secondaires présentent une structure d'assemblage similaire configurée pour coopérer avec l'interface principale.

Selon un autre aspect, l'équipement comporte un mécanisme de mise en référence ou de positionnement comprenant des éléments complémentaires portés d'une part par l'interface principale et d'autre part par lesdits effecteurs.

Le mécanisme de mise en référence peut comporter des pions destinés à se loger dans des logements complémentaires.

La mise en référence des interfaces secondaires sur l'interface principale se fait avantageusement par complémentarité de forme.

Les interfaces secondaires comportent une structure d'assemblage de forme générale annulaire ou cylindrique destinée à venir autour de l'interface principale.

Cette structure d'assemblage, par exemple annulaire ou cylindrique, comporte avantageusement un alésage configuré pour coopérer avec un épaulement au niveau de l'interface principale. Ceci permet un centrage et maintien en position de l'interface secondaire avec l'interface principale avant assemblage et un verrouillage de l'effecteur correspondant.

En outre, la structure d'assemblage des interfaces secondaires peut comporter des connecteurs électriques et/ou mécaniques aux effecteurs.

L'équipement comporte en outre un mécanisme de verrouillage comprenant des éléments complémentaires portés d'une part par l'interface principale et d'autre part par lesdits effecteurs.

L'interface secondaire lorsqu'elle est utilisée est maintenue entre l'interface principale et l'effecteur correspondant après verrouillage.

De préférence, le mécanisme de verrouillage est automatisé.

En alternative, le mécanisme de verrouillage peut être manuel.

Le mécanisme de verrouillage comporte par exemple un cimblot destiné à coopérer avec un module de serrage, notamment à billes. Le module de serrage peut être pneumatique.

Selon une alternative, le mécanisme de verrouillage peut être magnétique et/ou comporter un système de type sauterelle, ou de tirant, ou tout autre moyen de verrouillage approprié.

Selon un autre aspect, l'équipement comporte un système d'alimentation en énergie principal configuré pour alimenter l'interface principale et au moins un système d'alimentation en énergie secondaire pour l'alimentation de ladite au moins une interface secondaire.

Le système d'alimentation en énergie principal permet d'alimenter en énergie les fonctions de l'interface principale. Notamment, le système d'alimentation en énergie principal permet d'alimenter en énergie, par exemple pneumatique, la fonction de verrouillage de l'interface principale lorsqu'elle est automatisée.

Selon le premier principe d'utilisation permettant notamment une opération dite exigeante en accouplant directement le premier effecteur sur l'interface principale, le système d'alimentation en énergie principal permet également d'amener l'énergie nécessaire pour la réalisation de l'opération associée au premier effecteur.

Le système d'alimentation en énergie principal peut comporter ou être réalisé par un faisceau de câbles d'énergie interne, disposé à l'intérieur du bras du robot.

En alternative, le système d'alimentation en énergie principal peut comprendre un ou plusieurs éléments externes, rapportés, par rapport au robot, tel qu'un accastillage rapporté.

Le système d'alimentation en énergie secondaire permet d'alimenter en énergie l'interface secondaire, pour la réalisation de l'opération associée à l'effecteur associé.

Selon une option, le système d'alimentation en énergie principal peut alimenter également ladite au moins une interface secondaire, par exemple en énergie pneumatique.

Selon encore un autre aspect, un système d'alimentation en énergie peut comprendre un support fixe portant un panneau d'alimentation.

Un système d'alimentation en énergie peut comprendre une gaine d'alimentation d'au moins une interface associée, principale ou secondaire, configurée pour relier électriquement et/ou mécaniquement le panneau d'alimentation à l'interface associée.

La gaine d'alimentation comprend au moins un faisceau de câbles interne.

La gaine d'alimentation peut être disposée à l'extérieur du bras du robot. Ceci peut s'appliquer pour le ou les systèmes d'alimentation en énergie associé à une interface secondaire. Ceci peut aussi être le cas pour le système d'alimentation en énergie principal lorsque les fonctions de l'interface principale ne sont pas alimentées par un faisceau de câble d'énergie interne, disposé à l'intérieur du bras du robot.

Le support fixe peut être distinct de la machine.

En particulier, le système d'alimentation en énergie principal peut comprendre un premier support fixe portant un premier panneau d'alimentation et une première gaine d'alimentation configurée pour relier électriquement et/ou mécaniquement le premier panneau d'alimentation à l'interface principale. Le premier support fixe est par exemple réalisé sous la forme d'un poteau.

De même, le ou chaque système d'alimentation en énergie secondaire comprend un deuxième support fixe portant un deuxième panneau d'alimentation, et une deuxième gaine d'alimentation configurée pour relier électriquement et/ou mécaniquement le deuxième panneau d'alimentation à ladite au moins une interface secondaire.

Le support fixe d'un système d'alimentation en énergie d'une interface secondaire associée peut comporter une potence comprenant un mécanisme de maintien et/ou d'équilibrage de la gaine d'alimentation.

Le mécanisme d'équilibrage peut comporter au moins un prétensionneur.

La potence comprend une branche portant le mécanisme de maintien et/ou d'équilibrage.

L'équipement peut comporter une unité de pilotage du bras.

L'unité de pilotage peut être configurée pour commander le déplacement du bras de façon à amener l'interface principale sur un poste d'assemblage avec le premier effecteur ou une interface secondaire selon l'opération à réaliser. Ainsi, la mise en place du premier effecteur ou de l'interface secondaire et d'un deuxième effecteur correspondant, peut se faire de façon automatique.

De façon alternative, l'assemblage de l'interface principale au premier effecteur ou à une interface secondaire ainsi qu'au deuxième effecteur correspondant peut se faire manuellement.

En variante ou en complément, l'unité de pilotage comprend au moins un moyen de traitement configuré pour :
a. déterminer une variation de charge entre au moins deux ensembles opérationnels destinés à être accouplés à l'interface principale, associés à des opérations différentes, chaque ensemble opérationnel comprenant au moins un effecteur, et pour
b. appliquer un correctif de compensation de variation de charge en fonction de l'ensemble opérationnel accouplé à l'interface principale selon l'opération à réaliser.

Un premier ensemble opérationnel peut comprendre le premier effecteur destiné à être accouplé à l'interface principale sans interface secondaire intermédiaire. En alternative, un premier ensemble opérationnel peut comprendre un premier effecteur et une interface secondaire.

Les ensembles opérationnels additionnels comportent respectivement un jeu d'une interface secondaire et d'un deuxième effecteur.

Une interface secondaire peut être commune pour différents ensembles opérationnels.

D'autres avantages et caractéristiques de l'invention apparaîtront plus clairement à la lecture de la description suivante donnée à titre d'exemple illustratif et non limitatif, et des dessins annexés parmi lesquels :
La figure 1 est une première vue d'ensemble d'un équipement modulable pour usinage.
La figure 2 est une vue de dessus de l'équipement modulable de la figure 1.
La figure 3 est une vue de profil d'un premier effecteur accouplé à une interface principale pour un robot de l'équipement des figures 1 et 2.
La figure 4 est une vue de profil d'un deuxième effecteur accouplé à l'interface principale et une interface secondaire.
La figure 5 est une vue de profil d'un troisième effecteur accouplé à l'interface principale et une autre interface secondaire.
La figure 6 est une première vue éclatée de l'interface principale, et de l'interface secondaire et du deuxième effecteur de la figure 4.
La figure 7 est une deuxième vue éclatée de l'interface principale, et de l'interface secondaire et du deuxième effecteur de la figure 4.
La figure 8 est une vue en perspective à l'état assemblé de l'interface principale, et de l'interface secondaire et du deuxième effecteur des figures 6 et 7.
La figure 9 est une vue agrandie montrant un détail d'un mécanisme de verrouillage entre l'interface principale et les effecteurs des figures 3 à 5.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations, sans s'écarter de la portée de l'invention, telle que définie par les revendications.

Dans la description, on peut indexer certains éléments, comme par exemple premier, deuxième élément. Il peut s'agir d'un simple indexage pour différencier et dénommer des éléments proches mais non identiques. Cette indexation n'implique pas forcément une priorité d'un élément par rapport à un autre et on peut aisément interchanger de telles dénominations sans sortir du cadre de la présente description. Cette indexation n'implique pas non plus forcément un ordre dans le temps.

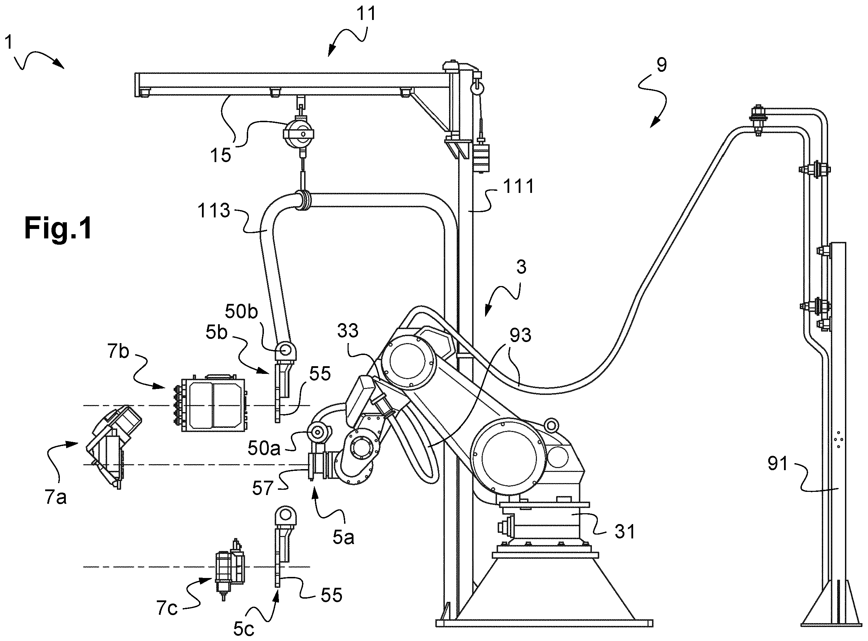

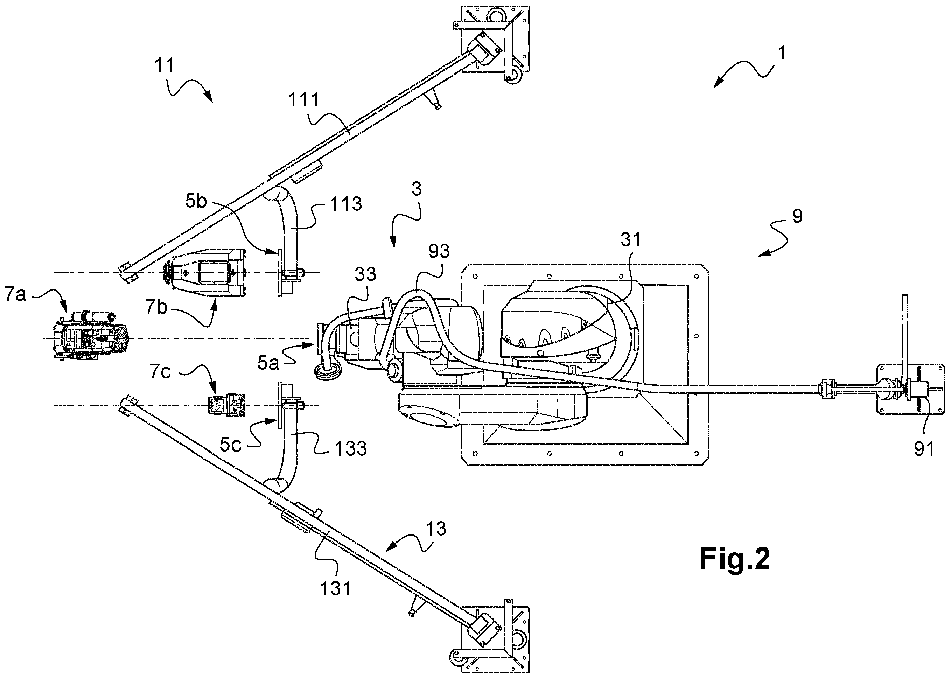

En référence aux figures 1 et 2, l'invention concerne un équipement 1, notamment d'usinage. Il peut s'agir d'usinage de précision, par exemple de façon non limitative d'usinage de plaques acoustiques pour la réalisation de résonateurs de Helmholtz.

Cet équipement 1 est modulable. Comme décrit par la suite, il permet de réaliser différentes opérations ou procédés, notamment d'usinage, sur une ou plusieurs pièces. Par exemple de façon non limitative, l'équipement 1 peut réaliser des opérations de fraisage, de perçage, de multi-perçage, et notamment de multi-perçage avec un nombre de broches ou d'électro-broches pour perçage différent.

De façon générale, l'équipement 1 modulable comporte au moins deux unités effectrices modulaires ou deux ensembles opérationnels modulaires, dont un premier et au moins un deuxième, qui sont respectivement configurés pour être assemblés à l'interface principale en extrémité du bras.

Pour cela, l'équipement 1 comprend :
a. une machine 3 portant au moins une interface principale ou primaire 5a,
b. au moins une interface secondaire 5b, 5c,
c. des effecteurs 7a, 7b, 7c,
d. au moins un système d'alimentation en énergie 9, 11, 13.

Les unités effectrices ou ensembles opérationnels modulaires comportent respectivement un effecteur associé 7a, 7b, 7c et éventuellement une interface secondaire 5b, 5c.

Dans la présente, le terme « machine » se réfère aussi bien à un robot tel qu'illustré dans l'exemple des figures 1 et 2, qu'à une machine-outil, une machine cartésienne.

La suite de la description se réfère à un robot 3, en particulier un robot industriel. Ce robot 3 est articulé, poly-articulé. En particulier, le robot 3 comprend un corps 31 à partir duquel s'étend au moins un bras 33 articulé, poly-articulé.

Les différentes opérations ou procédés que l'équipement 1 peut réaliser peuvent nécessiter des évolutions du robot 3 et des besoins en énergie différents. Par exemple, une première opération (comme une opération de fraisage) peut être plus exigeante en termes d'évolution ou d'amplitude du robot 3 et nécessiter moins d'énergie, tandis qu'une ou plusieurs opérations secondaires possibles (comme des opérations de perçage ou de multi-perçage) peuvent ne demander que peu de variation de position du robot 3 mais nécessiter un apport d'énergie supplémentaire.

En alternative, le robot 3 peut être apte à réaliser différentes opérations avec un apport en énergie spécifique pour une ou plusieurs opérations, mais sans forcément prévoir une configuration adaptée pour une opération dite plus exigeante comme décrit ci-dessus. Ces configurations avec ou sans opération dite exigeante seront décrites plus en détail par la suite.

L'interface principale 5a est configurée pour être portée par l'extrémité libre du bras 33 du robot 3. Elle peut être montée fixe sur l'extrémité libre du bras 33. L'interface principale 5a peut ainsi être est en permanence sur le robot 3.

L'interface principale 5a peut être accouplée à un effecteur par exemple 7a, ou selon les besoins à un ensemble opérationnel comprenant une interface secondaire 5b, 5c et un effecteur 7b, 7c correspondant.

L'équipement 1 peut comporter autant d'interfaces secondaires 5b, 5c que nécessaire suivant le nombre d'opérations ou procédés qui peuvent être mutualisés sur le robot 3.

Chaque interface secondaire 5b, 5c, est appropriée au besoin d'un procédé ou d'une opération et peut être accouplée à au moins un effecteur 7b, 7c pour réaliser l'opération associée. Une même interface secondaire 5b ou 5c peut être associée à plusieurs effecteurs 7b, 7c pour la réalisation de différentes opérations.

Dans l'exemple illustré, l'équipement 1 comporte deux interfaces secondaires 5b, 5c. Une seule interface secondaire ou plus de deux interfaces secondaires peuvent être prévues.

De même, l'équipement 1 peut comporter autant d'effecteurs 7a, 7b, 7c que nécessaire suivant le nombre de procédés ou d'opérations qui peuvent être mutualisés sur le robot 3.

Les interfaces secondaires 5b, 5c peuvent être mises en place sur l'interface principale 5a manuellement (par un opérateur) ou au contraire de façon automatique. De même, les effecteurs 7a, 7b ou 7c peuvent être mis en place manuellement ou de manière automatique. Les interfaces secondaires 5b, 5c et/ou les effecteurs 7a, 7b, 7c peuvent être disposés sur des supports correspondants (non représentés) et le robot 3 peut venir chercher l'interface secondaire 5b, 5c, et/ou l'effecteur 7a, 7b, 7c requis.

Lorsqu'il est assemblé sur l'interface principale 5a avec ou sans interface secondaire 5b, 5c, intermédiaire, un effecteur 7a, 7b, 7c, forme l'élément terminal du bras 33 du robot 3 permettant de réaliser l'opération associée. Dans l'exemple illustré, trois effecteurs 7a, 7b, 7c, sont prévus.

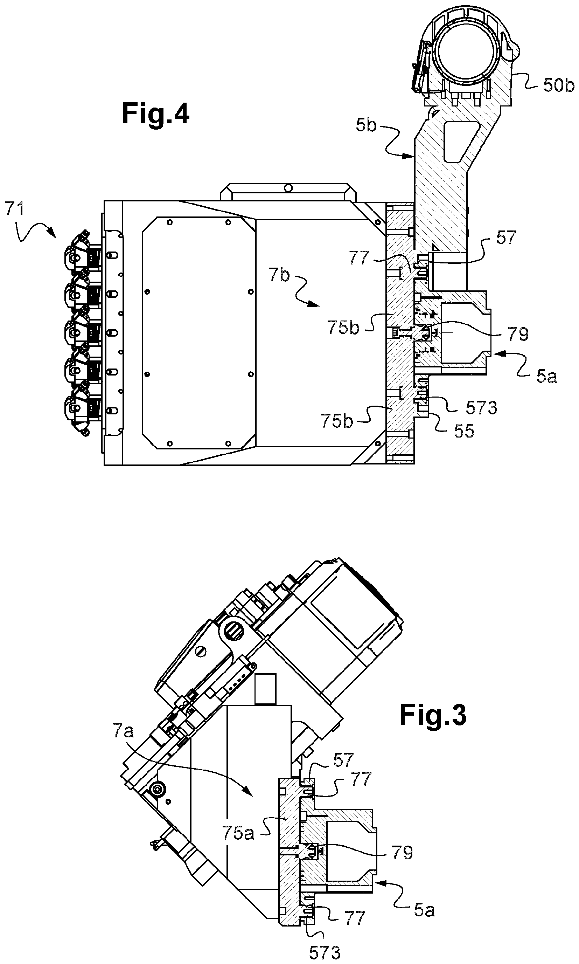

Différents exemples d'unités effectrices ou d'ensembles opérationnels accouplés à l'interface principale 5a sont illustrés sur les figures 3 à 5. Les ensembles opérationnels comportent soit uniquement un effecteur soit un jeu d'une interface secondaire 5b, 5c, et d'un effecteur additionnel 7b, 7c.

De façon générale, selon un premier principe d'utilisation, l'équipement 1 peut ne pas recourir systématiquement à une interface secondaire, notamment pour une première opération associée à un premier effecteur 7a, qui peut être exigeante par exemple en termes de précision, d'évolution du robot 3, ou encore d'accès sur pièce. Le premier effecteur 7a est par exemple de façon non limitative une broche de fraisage pour une opération de fraisage nécessitant peu d'énergie mais demandant une forte évolution/amplitude du robot 3.

Selon ce premier principe, l'interface principale 5a peut être accouplée au premier effecteur 7a, directement, c'est-à-dire sans interface secondaire intermédiaire, comme représenté sur la figure 3. Dans ce cas, l'unité effectrice ne comporte que le premier effecteur 7a et pas d'interface secondaire.

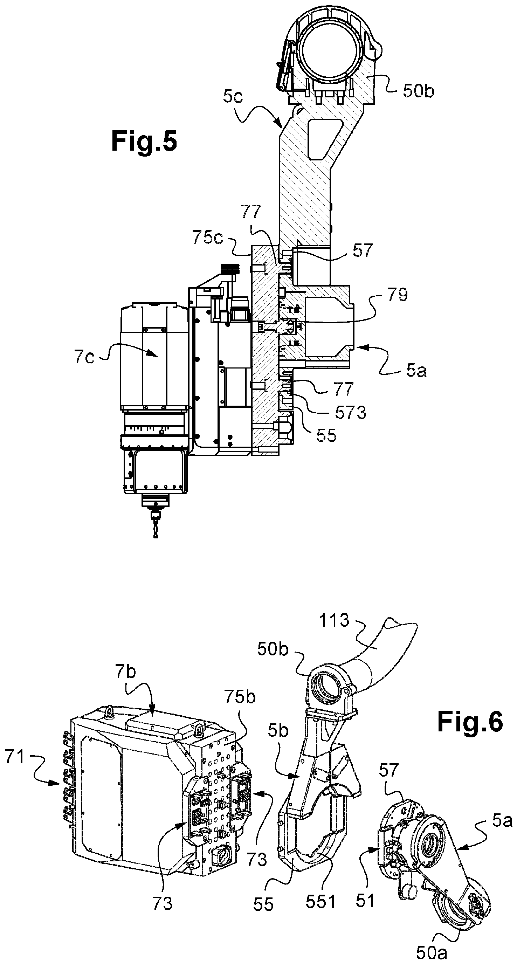

Une interface secondaire 7b, 7c, est utilisée entre l'interface principale 5a et les effecteurs additionnels 7b, 7c, comme représenté sur les figures 4 et 5, pour des opérations supplémentaires qui peuvent être moins exigeantes que la première, par exemple ne demander que peu de variation de position du robot. Les opérations supplémentaires peuvent en revanche nécessiter plus d'énergie que la première opération dite exigeante. Cela peut être le cas notamment pour du perçage, ou du multi-perçage.

Un ou plusieurs effecteurs additionnels 7b, 7c, peuvent être associés à chaque interface secondaire 5b, 5c.

Dans l'exemple de la figure 4, l'interface principale 5a peut être assemblée à une interface secondaire 5b accouplée à un deuxième effecteur 7b. Et, dans l'exemple de la figure 5, l'interface principale 5a peut être assemblée à une interface secondaire 5c accouplée à un troisième effecteur 7c.

Selon un deuxième principe d'utilisation, une interface secondaire peut être utilisée systématiquement pour toutes les opérations, aussi bien la première opération associée au premier effecteur 7a que pour les opérations associées aux effecteurs additionnels 7b, 7c. Dans ce cas, l'interface principale 5a est à chaque fois accouplée à un ensemble opérationnel ou une unité effectrice, c'est-à-dire un jeu d'une interface secondaire, et d'un effecteur, de façon similaire aux exemples des figures 4 et 5.

De plus, selon l'un ou l'autre de ces principes d'utilisation, une interface secondaire 5b, respectivement 5c, peut n'être appariée et ne correspondre qu'à un seul effecteur 7b, respectivement 7c, comme cela peut être le cas dans l'exemple des figures 4 et 5.

En alternative, une même interface secondaire peut correspondre à différents effecteurs. Une telle interface secondaire peut alors être commune pour différents ensembles opérationnels.

En effet, on peut envisager plusieurs opérations qui peuvent être similaires, par exemple de multi-perçage, associées à une même interface secondaire. Les effecteurs pour du multi-perçage se différentient par le nombre de broches ou d'électro-broches 71 qu'ils présentent en extrémité, comme visible sur la figure 4.

À titre d'exemple non limitatif, l'équipement peut avoir recours à deux effecteurs ayant un nombre de broches différent chacun, par exemple de façon purement illustrative un effecteur peut présenter quatre broches 71 et un autre effecteur peut avoir quinze broches 71. Dans ce cas, une même interface secondaire peut être configurée pour être assemblée à ces deux effecteurs et être capable d'amener de l'énergie et d'exploiter à la fois un effecteur quatre broches et un effecteur quinze broches.

Par ailleurs, en référence aux figures 6 à 8, un ou plusieurs connecteurs complémentaires 51, 53, 73 électriques et/ou mécaniques (pneumatiques, hydrauliques, fluidiques, ou autres) sont prévus entre les effecteurs et les interfaces secondaires et selon un mode de réalisation également l'interface principale 5a.

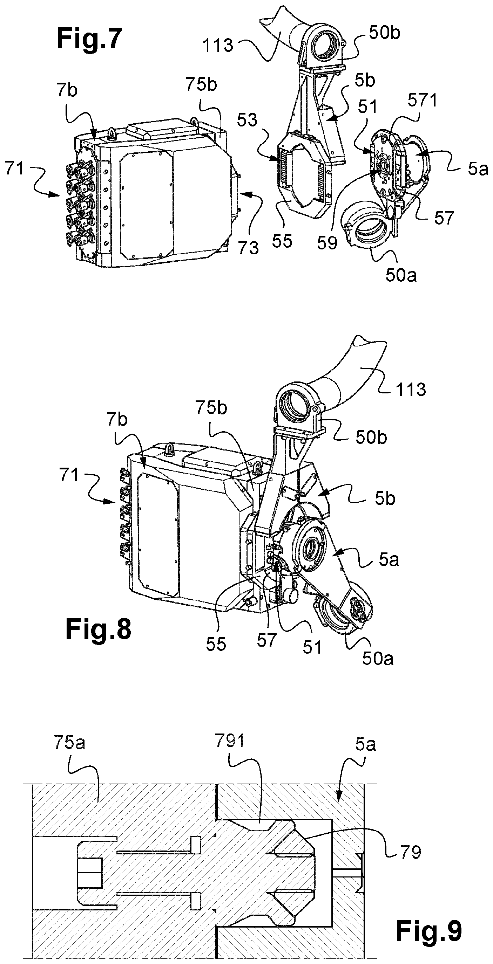

Un exemple de connecteurs 73 au niveau d'un effecteur secondaire 7b est mieux visible sur la figure 6. De façon complémentaire, un exemple de connecteurs 51 au niveau de l'interface principale 5a est visible sur les figures 6 et 8, et de connecteurs 53 au niveau d'une interface secondaire 5b sur la figure 7.

Comme précédemment décrit, lorsque l'interface principale 5a est directement accouplée au premier effecteur 7a, notamment pour l'opération la plus exigeante parmi les différentes opérations que peut réaliser l'équipement, l'interface principale 5a comporte de tels connecteurs 51. Au contraire, selon la variante recourant systématiquement à une interface secondaire accouplée à un effecteur et l'interface principale 5a, cette dernière pourrait être dépourvue de tels connecteurs.

Par ailleurs, en se référant de nouveau aux figures 4 et 5, l'interface principale 5a assure une fonction de mise en référence des interfaces secondaires 5b, 5c, c'est-à-dire que l'interface secondaire 5b, 5c peut être positionnée et centrée par rapport à l'interface principale 5a.

La mise en référence des interfaces secondaires 5b, 5c sur l'interface principale 5a est avantageusement assurée par complémentarité de forme.

Cette mise en référence peut se faire par exemple par appui-plan.

En particulier, l'interface principale 5a peut présenter des éléments de positionnement destinés à coopérer avec des éléments de positionnement complémentaires prévus sur les interfaces secondaires 5b, 5c, de façon à maintenir une interface secondaire donnée 5b, 5c, sur l'interface principale 5a pendant une opération d'installation d'un effecteur. Cela permet d'empêcher que l'interface secondaire 5b, 5c, ne bouge ou ne tombe pendant l'installation de l'effecteur.

La précision du positionnement d'une interface secondaire 5b, 5c, sur l'interface principale 5a doit satisfaire la tolérance de connexion des connecteurs 51, 53.

Les interfaces secondaires 5b, 5c présentent une structure d'assemblage 55 similaire, formant un noyau commun, permettant leur positionnement sur l'interface principale 5a. Cette structure d'assemblage 55 regroupe les éléments de positionnement identiques sur toutes les interfaces secondaires 5b, 5c.

La structure d'assemblage 55 des interfaces secondaires 5b, 5c est destinée à coopérer avec l'interface principale 5a, en particulier avec une structure d'assemblage complémentaire 57. À cet effet, la structure d'assemblage 55 présente une forme générale complémentaire à celle de l'interface principale 5a, en particulier de sa structure d'assemblage 57.

La structure d'assemblage 55 des interfaces secondaires 5b, 5c peut être destinée à venir entourer ou encadrer au moins en partie l'interface principale 5a. De façon non limitative, la structure d'assemblage 55 des interfaces secondaires 5b, 5c, peut être de forme générale annulaire ou cylindrique, destinée à venir autour de l'interface principale 5a, plus précisément autour de sa structure d'assemblage 57. La structure d'assemblage 57 de l'interface principale 5a présente par exemple un contour globalement circulaire.

En variante ou en complément, l'interface principale 5a peut former au moins en partie un support pour les interfaces secondaires, plus particulièrement de la structure d'assemblage 55 des interfaces secondaires 5b, 5c.

Un exemple décrit ci-après est illustré sur les figures 6 à 8, concernant une unité effectrice comportant la deuxième interface secondaire 5b et le deuxième effecteur 7b, et assemblée sur l'interface principale 5a. La description qui suit de la structure d'assemblage 55 de la deuxième interface 5b en référence à ces figures, s'applique également à la troisième interface 5c de la figure 5, ou à toute autre interface secondaire additionnelle non représentée.

La structure d'assemblage 55 de l'interface secondaire 5b, par exemple annulaire, comporte avantageusement un alésage 551 (voir figure 6) configuré pour coopérer avec un épaulement 571 (voir figure 7) au niveau de l'interface principale 5a. Ceci permet une mise en référence, un centrage et un maintien en position de l'interface secondaire 5b avec l'interface principale avant assemblage et verrouillage de l'effecteur 7b correspondant (figure 8).

Cet exemple de coopération entre un épaulement 571 et un alésage 551 n'est pas limitatif. Une alternative non représentée, pourrait par exemple être une coopération de piges et alésages.

En outre, la structure d'assemblage 55 des interfaces secondaires 5b, peut comporter les connecteurs 53 électriques et/ou mécaniques aux effecteurs 7b correspondants.

De façon similaire, notamment lorsque l'interface principale 5a est destinée à être accouplée à un premier effecteur 7a sans interface secondaire intermédiaire (figure 3), la structure d'assemblage 57 de cette interface principale peut porter les connecteurs électriques et/ou mécaniques à ce premier effecteur 7a.

Par ailleurs, en se référant de nouveau aux figures 3 à 5, l'interface principale 5a assure en outre une fonction de mise en référence et de verrouillage des effecteurs 7a, 7b, 7c, c'est-à-dire qu'un effecteur 7a, 7b, 7c, peut être positionné et centré par rapport à l'interface principale 5a et l'ensemble peut être verrouillé.

À cet effet, l'équipement comporte au moins un mécanisme de mise en référence et/ou de verrouillage comprenant des éléments complémentaires portés d'une part par l'interface principale 5a et d'autre part par les effecteurs 7a, 7b, 7c.

De façon générale, le mécanisme de mise en référence et/ou de verrouillage entre les effecteurs 7a, 7b, 7c et l'interface principale 5a, doit assurer une précision et en particulier permettre une répétabilité de positionnement des effecteurs 7a, 7b, 7c sur l'interface principale 5a. Il peut en outre être avantageusement configuré pour permettre une reprise des efforts, par exemple d'usinage, et du poids, de la charge, des effecteurs 7a, 7b, 7c. La configuration et le dimensionnement d'un tel mécanisme peut être réalisé sur la base de l'opération la plus exigeante.

L'interface principale 5a présente donc des éléments de mise en référence et/ou de verrouillage destinés à coopérer avec des éléments complémentaires prévus sur le premier effecteur 7a, et sur le ou les effecteurs 7b, 7c secondaires.

Les effecteurs 7a, 7b, 7c peuvent respectivement présenter une partie ou face extrémale 75a, 75b, 75c présentant une structure commune, ou noyau commun, pour la mise en référence et le verrouillage avec l'interface principale 5a.

La structure commune peut, par exemple mais pas obligatoirement, correspondre à la partie extrémale 75a du premier effecteur 7a destiné à être accouplé à l'interface principale 5a sans interface secondaire intermédiaire comme dans l'exemple de la figure 3.

Selon un exemple particulier non limitatif, pour la mise en référence, on peut prévoir un nombre prédéfini de pions 77 destinés à se loger dans des logements 573 complémentaires. Dans l'exemple des figures 3 à 5, les pions 77 sont portés par la structure commune des parties extrémales 75a, 75b, 75c des effecteurs 7a, 7b, 7c, et les logements 573 complémentaires sont prévus sur l'interface principale 5a, en particulier sur la structure d'assemblage 57 de l'interface principale 5a. L'inverse est envisageable. Un tel système de pions 77 et de logements 573 complémentaires peut par exemple être en périphérie. L'insertion des pions 77 dans les logements complémentaires 573 assure le positionnement et le centrage d'un effecteur donné 7a, 7b, 7c, par rapport à l'interface principale 5a.

Un ou plusieurs pions anti rotation peuvent être prévus en variante ou en complément de tels pions 77 de centrage.

En outre, le mécanisme de verrouillage peut être automatisé. En alternative, le mécanisme de verrouillage peut être manuel.

Selon le mode de réalisation illustré, le mécanisme de verrouillage comporte un cimblot 79 destiné à coopérer avec un module de serrage, en particulier à billes ou système de cage à billes 59 au niveau de l'interface principale 5a en partie visible sur la figure 7. À titre d'exemple, le cimblot 79 présente une zone de section réduite définissant une gorge 791 (mieux visible sur la figure 9) dans laquelle les billes (non représentées sur cette figure) resserrées peuvent venir se loger. Le système de cimblot 79 et de billes peut par exemple être central. Le module de serrage / desserrage est par exemple pneumatique.

Selon une alternative non représentée ou en complément, le mécanisme de verrouillage peut être magnétique et/ou comporter un système de type sauterelle (notamment dans le cas d'une mise en place manuelle), ou de tirant, ou tout autre moyen de verrouillage approprié.

Après mise en place d'une interface secondaire 5b, 5c, sur l'interface principale 5a, l'interface secondaire 5b, 5c est maintenue, prise en sandwich au moins en partie, entre l'interface principale 5a et l'effecteur 7a, 7b, 7c correspondant, comme illustré sur les figures 4, 5 et 8. Autrement dit, l'interface secondaire 5b, 5c est définitivement positionnée et verrouillée lorsque l'effecteur 7a, 7b, 7c est accouplé sur l'interface principale 5a (c'est-à-dire qu'il est positionné et verrouillé).

En se référant de nouveau aux figures 1 et 2, les interfaces 5a et/ou 5b et 5c sont destinées à être alimentées en énergie électrique et/ou mécanique.

Avantageusement, un système d'alimentation en énergie principal 9 est prévu pour alimenter l'interface principale 5a. Ceci peut être à minima le cas lorsque le mécanisme de verrouillage entre l'interface principale 5a et les effecteurs 7a, 7b, 7c est automatisé. Par exemple, le système d'alimentation en énergie principal 9 permet d'alimenter en énergie pneumatique la fonction de verrouillage de l'interface principale 5a.

Le système d'alimentation en énergie principal 9 est en outre nécessaire pour le mode de réalisation, dans lequel l'interface principale 5a peut être directement accouplée au premier effecteur 7a. L'interface principale 5a assure également la fonction d'alimentation en énergie pour l'opération associée au premier effecteur 7a qui est avantageusement la plus exigeante comme mentionné précédemment. Dans ce cas, le système d'alimentation en énergie principal 9 est avantageusement optimisé spécifiquement pour l'opération associée au premier effecteur 7a.

Selon une option, le système d'alimentation en énergie principal 9 peut comprendre un ou plusieurs éléments externes, rapportés, par rapport au robot 3. Un exemple est décrit par la suite en référence au mode de réalisation des figures 1 et 2 avec un accastillage rapporté, externe au robot 3.

Selon une autre option (non représentée), le système d'alimentation en énergie principal peut comporter un faisceau de câbles d'énergie interne au bras 33, c'est-à-dire situé à l'intérieur du bras 33 du robot 3, ou exploiter un tel faisceau interne déjà prévu dans le bras 33 du robot 3. Cette option est en particulier avantageuse dans la configuration minimale décrite ci-dessus permettant d'alimenter en énergie seulement une fonction de verrouillage de l'interface principale 5a, ou en alternative lorsque les besoins en énergie lorsque l'interface principale 5a est accouplée au premier effecteur 7a sont faibles. Autrement dit, les fonctions de l'interface principale 5a sont alimentées par le faisceau interne du robot 3. Ainsi, le système d'alimentation en énergie principal réalisé par ce faisceau interne, ne comporte pas d'élément rapporté, extérieur par rapport au robot 3. Ceci optimise d'autant plus le robot 3, notamment lorsqu'il doit satisfaire une opération exigeante associée au premier effecteur 7a.

Selon le mode de réalisation illustré sur les figures 1 et 2, le système d'alimentation en énergie principal 9 comprend un premier support fixe 91 et une première gaine d'alimentation 93.

Le premier support fixe 91 porte par exemple un premier panneau d'alimentation. Le premier support fixe 91 est distinct du robot 3, il est par exemple réalisé sous la forme d'un poteau.

La première gaine d'alimentation 93 (aussi nommée accastillage principal) comprend au moins un faisceau de câbles interne. Les énergies nécessaires pour l'opération associée au premier effecteur 7a, par exemple la plus exigeante, peuvent être acheminées par l'accastillage principal ou première gaine d'alimentation 93. Cette dernière peut être optimisée, c'est-à-dire en particulier dimensionnée de façon optimisée, et avantageusement réduite, lorsque cette opération, par exemple de fraisage, dite exigeante notamment en termes d'évolution du robot 3 ne requiert pas beaucoup de câbles d'alimentation

La première gaine d'alimentation 93, ou plus précisément son faisceau de câble interne, permet de relier électriquement et/ou mécaniquement le premier panneau d'alimentation à l'interface principale 5a. L'interface principale 5a présente à cet effet une portion de raccordement 50a, par exemple annulaire, à la première gaine d'alimentation 93. Cette portion de raccordement 50a forme par exemple une extrémité de l'interface principale 5a opposée à l'extrémité présentant la structure 57 destinée à coopérer avec une interface secondaire 5b, 5c et/ou un effecteur 7a, 7b, 7c. On peut prévoir un bras de liaison entre cette structure 57 et la portion de raccordement 50a.

De plus, l'interface principale 5a étant implantée sur le bras du robot 3, la gaine d'alimentation 93 acheminant l'énergie jusqu'à cette interface principale 5a en extrémité du bras du robot 3, n'est pas contraignante pour le robot 3, et permet un maximum d'amplitude du bras 33 avec un minimum de tension ou contrainte appliqué par cette première gaine d'alimentation 93. On évite ainsi de générer des déviations ou imprécisions en extrémité du bras 33 du robot 3.

Chaque interface secondaire 5b ou 5c est destinée à être raccordée à un système d'alimentation en énergie 11, 13, spécifique à l'opération associée, de façon à permettre l'alimentation en énergies pour les opérations supplémentaires autres que la première opération, qui peuvent par exemple nécessiter plus d'énergie et plus de câbles que la première opération. Dans ce cas, les systèmes de distribution électriques 11, 13 sont nommés secondaires.

Selon l'alternative pour laquelle une interface secondaire est systématiquement utilisée pour toutes les opérations, dans ce cas l'interface principale 5a peut n'avoir qu'une fonction de mise en référence et de verrouillage et non d'alimentation, cette dernière étant assurée par les interfaces secondaires et un système de distribution spécifique 11, 13 permettant d'amener l'énergie nécessaire pour chaque opération.

Selon une option, le système d'alimentation en énergie principal peut alimenter également les interfaces secondaires, en énergie déjà disponible pour l'interface principale 5a et qui peut être mutualisée, par exemple de façon non limitative en énergie pneumatique notamment lorsque la fonction de verrouillage au niveau de l'interface principale 5a est assurée par un mécanisme pneumatique.

Ainsi, selon l'un ou l'autre des principes d'utilisation (avec ou sans recours systématique à une interface secondaire), chaque interface secondaire 5b ou 5c est destinée à être raccordée à un faisceau d'énergies spécifique pour l'opération ou les opérations associées aux effecteurs 7b, 7c correspondants. Pour ce faire, un système d'alimentation en énergie 11, 13 est associé à chaque interface secondaire 5b, 5c.

Dans l'exemple des figures 1 et 2, un système d'alimentation en énergie 11 est associé à la deuxième interface secondaire 5b et un autre système d'alimentation en énergie 13 est associé à la troisième interface secondaire 5c. Lorsqu'un premier système d'alimentation en énergie dit principal est prévu comme décrit précédemment, dans ce cas le ou les systèmes d'alimentation en énergie dits secondaires, associés à une interface secondaire 5b, respectivement 5c, sont nommés deuxième système d'alimentation en énergie 11, respectivement troisième système d'alimentation en énergie 13.

Le deuxième système d'alimentation en énergie 11 comprend un deuxième support fixe 111 et une deuxième gaine d'alimentation 113. De même, le troisième système d'alimentation en énergie 13 comprend un troisième support fixe 131 et une troisième gaine d'alimentation 133. Les termes « deuxième » et « troisième » s'appliquent dans l'exemple dans lequel un système d'alimentation en énergie principal 9 est prévu et comporte un premier support fixe et une première gaine d'alimentation. Bien entendu, le support fixe 111, respectivement 131, et la gaine d'alimentation 113, respectivement 133, d'un système d'alimentation en énergie 11, respectivement 13, associé à une interface secondaire 5b, respectivement 5c, ne sont pas tributaires de la présence d'un premier support fixe et d'une première gaine d'alimentation.

De façon similaire à l'exemple de système d'alimentation en énergie principal 9 précédemment décrit, le deuxième, respectivement troisième, support fixe 111, respectivement 131, peut porter un deuxième, respectivement troisième panneau d'alimentation. Ces supports fixes 111, 131 sont distincts du robot 3. Le ou les supports fixes additionnels 111, 131 peuvent être disposés latéralement par rapport au corps 31 de la machine à une distance prédéfinie.

Avantageusement, le deuxième et/ou le troisième support fixe 111, 131 comporte ou est réalisé sous forme d'une potence. Cette potence peut porter un mécanisme de maintien et/ou d'équilibrage 15 de la gaine d'alimentation correspondante 113, 133. Ce mécanisme de maintien et/ou d'équilibrage 15 peut comprendre par exemple un prétensionneur. En particulier, la potence comprend une branche portant un tel prétensionneur.

On pourrait envisager en alternative que les deuxième et troisième supports fixes 131, 133 soient réalisés sous la forme d'un poteau.

Comme décrit précédemment pour la première gaine d'alimentation 93, les gaines d'alimentation 113, 133 (ou accastillages) supportent respectivement au moins un faisceau de câbles interne permettant d'amener les énergies nécessaires pour les opérations spécifiques respectivement associées aux effecteurs 7b, 7c auxquels les interfaces secondaires 5b, 5c sont respectivement accouplées.

Les gaines d'alimentation 113, 133, plus précisément leurs faisceaux de câbles internes respectifs, permettent de relier électriquement et/ou mécaniquement le panneau d'alimentation correspondant à l'interface secondaire associée, 5b, respectivement 5c. Les interfaces secondaires 5b, 5c présentent à cet effet une portion de raccordement 50b, respectivement 50c, par exemple annulaire, à la gaine d'alimentation 113, 133 correspondante. Cette portion de raccordement 50b, 50c forme par exemple une extrémité de l'interface secondaire 5b, 5c opposée à l'extrémité présentant la structure d'assemblage 55 destinée à coopérer avec l'interface principale 5a. On peut prévoir un bras de liaison entre cette structure d'assemblage 55 et la portion de raccordement 50b, respectivement 50c.

De telles gaines d'alimentation 93, 113, 133 (ou accastillages) peuvent être plus ou moins encombrantes et lourdes selon les besoins des opérations associées. Les mécanismes de verrouillage permettant de maintenir les effecteurs 7a, 7b, 7c sur l'interface principale 5a avec ou sans interface secondaire 5b, 5c intermédiaire sont avantageusement dimensionnés de façon à supporter les efforts inhérents à de telles gaines.

Enfin, l'équipement 1 comporte une unité de pilotage du bras 33 du robot 3.

Cette unité de pilotage peut notamment commander le déplacement du bras 33 pour une opération de préhension d'une interface secondaire 5b, 5c, ou d'un effecteur 7a, 7b, 7c à charger sur le robot 3. Dans ce cas, l'unité de pilotage peut commander le déplacement du bras 33 pour amener l'interface principale 5a au niveau d'un poste d'assemblage avec le premier effecteur 7a sur un support correspondant (non représenté) ou avec une interface secondaire 5b, 5c sur un autre support correspondant, selon l'opération à réaliser. Ainsi, comme décrit précédemment, la mise en place du premier effecteur 7a ou d'une interface 5b, 5c secondaire puis d'un effecteur 7b, 7c correspondant, peut se faire de façon automatique.

L'unité de pilotage permet avantageusement de contrôler l'énergie qui est envoyée à une interface secondaire 5b, 5c en particulier lorsque cette dernière peut être associée à différents effecteurs. Par exemple, comme décrit précédemment dans le cas d'une interface secondaire commune pour des effecteurs de multi-perçage ayant un nombre de broches différents, l'unité de pilotage permet d'envoyer l'énergie au juste besoin sur les broches selon l'effecteur qui est assemblé à l'interface secondaire.

Enfin, une compensation peut être mise en oeuvre au niveau du pilotage pour gérer les variations de charge au niveau de l'interface principale 5a. En effet, deux effecteurs pour deux opérations données, peuvent être très différents en termes de dimension et de charge. Cette charge peut avoir un impact sur le robot 3 et la précision de positionnement du robot 3 dans l'espace, par exemple de façon purement illustrative avec une différence de charge 80kg en fonction de l'effecteur ou de l'ensemble opérationnel qui est accouplé sur l'interface principale 5a, le robot 3 risque de mal se positionner, et d'être imprécis.

Pour ce faire, l'unité de pilotage peut comprendre au moins un moyen de traitement configuré pour déterminer une variation de charge entre au moins deux ensembles opérationnels destinés à être accouplés à l'interface principale 5a, et associés à des opérations différentes. L'unité de pilotage intègre les inerties propres à chaque ensemble qui est destiné à être monté sur l'interface principale 5a.

Ce moyen de traitement ou un autre peut être configuré pour appliquer un correctif de compensation de variation de charge en fonction de l'ensemble opérationnel qui est effectivement accouplé à l'interface principale 5a. Cela permet une compensation de l'impact de la charge embarquée sur les raideurs des articulations et sur les lois d'asservissement, et contribuer encore plus à éviter des imprécisions du robot 3.

La description qui précède se réfère à un robot 3, en particulier un robot industriel. Bien entendu, cette description peut s'appliquer également à une machine-outil, une machine cartésienne conventionnelle, notamment si elle est légère car elle peut présenter une problématique similaire de restrictions de champ d'action ou d'imprécisions lié à l'accastillage exerçant une contrainte et risquant de dévier la trajectoire de son bras.

Ainsi, la ou les interfaces secondaires 5b, 5c associées à des effecteurs et qui peuvent être chargées sur l'interface principale 5a en extrémité du bras du robot 3, plus généralement de la machine, permettent facilement la mutualisation d'opérations, de process, sur un même robot ou machine qui peuvent nécessiter des besoins en énergies variables, et demander une précision ou une envergure d'action importante du robot 3, de la machine, tout en limitant les contraintes exercées sur son bras 33.

Il n'est plus nécessaire de prévoir plusieurs machines pour les différentes opérations, ce qui permet d'optimiser le coût de production des pièces et de la rentabilité de la machine.

En outre, cela permet un gain de précision sur pièce. En effet, le fait de pouvoir effectuer plusieurs opérations sur une pièce qui est disposée dans un seul outillage sur un seul moyen d'usinage permet de s'affranchir des dispersions liées aux repositionnements successifs de la pièce dans les différents outillages et les localisations de l'ensemble outillage et pièce, dans chaque machine réalisant l'opération.

L'interface principale 5a peut éventuellement être alimentée grâce à une gaine d'alimentation principale 93 qui peut être interne au bras 33 du robot 3 ou non, tandis que les interfaces secondaires 5b, 5c sont alimentées par des gaines d'alimentation 113, 133 additionnelles supportées par des supports spécifiques 111, 131, indépendants du robot 3, plus généralement de la machine. Ceci permet de réaliser le câblage (routage, raccordement aux interfaces secondaires 5b, 5c, raccordement au panneau de commande) sans nécessiter la présence physique du robot 3, de la machine.

De plus, cette solution offre une constante possibilité d'évolution de la machine 3, en rajoutant des interfaces secondaires nécessaires, pour répondre à des nouveaux besoins, de nouveaux marchés.

Cette solution permet en outre de réduire le temps de fabrication, d'installation de la machine, et ainsi que les risques de dysfonctionnement à la remise en route.

## Revendications

1. Équipement (1), notamment d'usinage, comprenant une machine (3) présentant au moins un bras (33), et comprenant au moins un premier effecteur (7a) configuré pour être accouplé à une extrémité libre du bras (33),
- l'équipement (1) étant modulable et comportant :
• une interface principale (5a) configurée pour être portée par l'extrémité libre du bras (33) et configurée pour être accouplée au premier effecteur (7a),
• au moins une interface secondaire (5b, 5c) configurée pour être accouplée à l'interface principale (5a), et
• au moins un deuxième effecteur (7b, 7c) configuré pour être accouplé à ladite au moins une interface secondaire (5b, 5c) et à l'interface principale (5a),
- l'équipement (1) comportant au moins un système d'alimentation en énergie (11, 13) configuré pour alimenter ladite au moins une interface secondaire (5b, 5c).

2. Équipement (1) selon la revendication précédente, dans lequel le premier effecteur (7a) est configuré pour être également accouplé à une interface secondaire, l'interface secondaire étant disposée entre le premier effecteur (7a) et l'interface principale (5a).

3. Équipement (1) selon l'une des revendications précédentes, comportant :
- au moins deux interfaces secondaires (5b, 5c), et
- pour chaque interface secondaire (5b, 5c), un système d'alimentation en énergie (11, 13) associé.

4. Équipement (1) selon la revendication précédente, dans lequel les interfaces secondaires (5b, 5c) présentent une structure d'assemblage (55) similaire configurée pour coopérer avec l'interface principale (5a).

5. Équipement (1) selon l'une des revendications précédentes, comportant un mécanisme de verrouillage comprenant des éléments complémentaires (59, 79) portés d'une part par l'interface principale (5a) et d'autre part par lesdits effecteurs (7a, 7b, 7c).

6. Équipement (1) selon l'une des revendications précédentes, comprenant :
- un système d'alimentation en énergie principal (9) configuré pour alimenter l'interface principale (5a), et
- au moins un système d'alimentation en énergie secondaire (11, 13) pour l'alimentation de ladite au moins une interface secondaire (5b, 5c).

7. Équipement (1) selon l'une des revendications précédentes, dans lequel ledit système d'alimentation en énergie (9 ; 11 ; 13) comprend un support fixe (91 ; 111 ; 131) portant un panneau d'alimentation et une gaine d'alimentation (93 ; 113 ; 133) d'une interface (5a ; 5b ; 5c) associée configurée pour relier électriquement et/ou mécaniquement le panneau d'alimentation à l'interface associée (5a ; 5b ; 5c).

8. Équipement (1) selon la revendication précédente, dans lequel le support fixe (111, 131) d'un système d'alimentation en énergie (11, 13) d'une interface secondaire (5b, 5c) associée comporte une potence comprenant un mécanisme de maintien et/ou d'équilibrage de la gaine d'alimentation (113, 133).

9. Équipement (1) selon l'une des revendications précédentes, comportant une unité de pilotage du bras (33) configurée pour commander le déplacement du bras (33) de façon à amener l'interface principale (5a) sur un poste d'assemblage avec le premier effecteur (7a) ou une interface secondaire (5b, 5c) selon l'opération à réaliser.

10. Équipement (1) selon la revendication précédente, dans lequel l'unité de pilotage comprend au moins un moyen de traitement configuré pour :
- déterminer une variation de charge entre au moins deux ensembles opérationnels (7a ; 5b, 7b ; 5c, 7c) destinés à être accouplés à l'interface principale (5a), associés à des opérations différentes, chaque ensemble opérationnel (7a ; 5b, 7b ; 5c, 7c) comprenant au moins un effecteur (7a ; 7b ; 7c), et pour
- appliquer un correctif de compensation de variation de charge en fonction de l'ensemble opérationnel (7a ; 5b, 7b ; 5c, 7c) accouplé à l'interface principale (5a) selon l'opération à réaliser.

## Patentansprüche

1. Ausstattung (1), insbesondere zur Bearbeitung, umfassend eine Maschine (3) mit wenigstens einem Arm (33) und umfassend wenigstens einen ersten Effektor (7a), der dazu ausgebildet ist, an ein freies Ende des Arms (33) gekoppelt zu sein,
- wobei die Ausstattung (1) modulierbar ist und Folgendes aufweist:
• eine Hauptschnittstelle (5a), die dazu ausgebildet ist, vom freien Ende des Arms (33) getragen zu werden, und dazu ausgebildet ist, an den ersten Effektor (7a) gekoppelt zu sein,
• wenigstens eine Sekundärschnittstelle (5b, 5c), die dazu ausgebildet ist, an die Hauptschnittstelle (5a) gekoppelt zu sein, und
• wenigstens einen zweiten Effektor (7b, 7c), der dazu ausgebildet ist, an die wenigstens eine Sekundärschnittstelle (5b, 5c) und an die Hauptschnittstelle (5a) gekoppelt zu sein,
- wobei die Ausstattung (1) wenigstens ein Energieversorgungssystem (11, 13) aufweist, das dazu ausgebildet ist, die wenigstens eine Sekundärschnittstelle (5b, 5c) zu versorgen.

2. Ausstattung (1) nach dem vorhergehenden Anspruch, wobei der erste Effektor (7a) dazu ausgebildet ist, ebenfalls an eine Sekundärschnittstelle gekoppelt zu sein, wobei die Sekundärschnittstelle zwischen dem ersten Effektor (7a) und der Hauptschnittstelle (5a) angeordnet ist.

3. Ausstattung (1) nach einem der vorhergehenden Ansprüche, aufweisend:
- wenigstens zwei Sekundärschnittstellen (5b, 5c) und
- für jede Sekundärschnittstelle (5b, 5c) ein zugehöriges Energieversorgungssystem (11, 13).

4. Ausstattung (1) nach dem vorhergehenden Anspruch, wobei die Sekundärschnittstellen (5b, 5c) eine ähnliche Montagestruktur (55) aufweisen, die dazu ausgebildet ist, mit der Hauptschnittstelle (5a) zusammenzuwirken.

5. Ausstattung (1) nach einem der vorhergehenden Ansprüche, aufweisend einen Verriegelungsmechanismus, der komplementäre Elemente (59, 79) umfasst, die einerseits von der Hauptschnittstelle (5a) und andererseits von den Effektoren (7a, 7b, 7c) getragen werden.

6. Ausstattung (1) nach einem der vorhergehenden Ansprüche, umfassend:
- ein Haupt-Energieversorgungssystem (9), das dazu ausgebildet ist, die Hauptschnittstelle (5a) zu versorgen, und
- wenigstens ein Sekundär-Energieversorgungssystem (11, 13) für die Versorgung der wenigstens einen Sekundärschnittstelle (5b, 5c).

7. Ausstattung (1) nach einem der vorhergehenden Ansprüche, wobei das Energieversorgungssystem (9; 11; 13) einen festen Träger (91; 111; 131) umfasst, der ein Versorgungspanel und eine ummantelte Versorgungsleitung (93; 113; 133) zur Versorgung einer zugehörigen Schnittstelle (5a; 5b; 5c) trägt, die dazu ausgebildet ist, das Versorgungspanel elektrisch und/oder mechanisch mit der zugehörigen Schnittstelle (5a; 5b; 5c) zu verbinden.

8. Ausstattung (1) nach dem vorhergehenden Anspruch, wobei der feste Träger (111, 131) eines Energieversorgungssystems (11, 13) einer zugehörigen Sekundärschnittstelle (5b, 5c) einen Galgen aufweist, der einen Halte- und/oder Ausgleichsmechanismus für die ummantelte Versorgungsleitung (113, 133) umfasst.

9. Ausstattung (1) nach einem der vorhergehenden Ansprüche, aufweisend eine Einheit zur Ansteuerung des Arms (33), die dazu ausgebildet ist, die Bewegung des Arms (33) so zu steuern, dass die Hauptschnittstelle (5a) zu einer Station zur Montage mit dem ersten Effektor (7a) oder einer Sekundärschnittstelle (5b, 5c) gebracht wird, je nach dem durchzuführenden Arbeitsgang.

10. Ausstattung (1) nach dem vorhergehenden Anspruch, wobei die Ansteuereinheit wenigstens ein Verarbeitungsmittel umfasst, das dafür ausgebildet ist:
- eine Laständerung zwischen wenigstens zwei Betriebsanordnungen (7a; 5b, 7b; 5c, 7c) zu bestimmen, die dazu bestimmt sind, an die Hauptschnittstelle (5a) gekoppelt zu sein, die verschiedenen Arbeitsgängen zugeordnet sind, wobei jede Betriebsanordnung (7a; 5b, 7b; 5c, 7c) wenigstens einen Effektor (7a; 7b; 7c) umfasst, und
- ein Laständerungs-Ausgleichskorrektiv je nach der Betriebsanordnung (7a; 5b, 7b; 5c, 7c) anzuwenden, die an die Hauptschnittstelle (5a) gekoppelt ist, je nach dem durchzuführenden Arbeitsgang.

## Claims

1. Equipment (1), notably for machining, comprising a machine (3) having at least one arm (33), and comprising at least one first effector (7a) which is configured to be coupled to a free end of the arm (33),
- the equipment (1) being modular and comprising:
• a main interface (5a) which is configured to be carried by the free end of the arm (33) and which is configured to be coupled to the first effector (7a),
• at least one secondary interface (5b, 5c) which is configured to be coupled to the main interface (5a), and
• at least one second effector (7b, 7c) which is configured to be coupled to said at least one secondary interface (5b, 5c) and to the main interface (5a),
- the equipment (1) comprising at least one power supply system (11, 13) which is configured to supply power to said at least one secondary interface (5b, 5c).

2. Equipment (1) according to the preceding claim, wherein the first effector (7a) is configured to also be coupled to a secondary interface, the secondary interface being arranged between the first effector (7a) and the main interface (5a).

3. Equipment (1) according to one of the preceding claims, comprising:
- at least two secondary interfaces (5b, 5c), and
- an associated power supply system (11, 13) for each secondary interface (5b, 5c) .

4. Equipment (1) according to the preceding claim, wherein the secondary interfaces (5b, 5c) have a similar assembly structure (55) which is configured to cooperate with the main interface (5a).

5. Equipment (1) according to one of the preceding claims, comprising a locking mechanism comprising complementary elements (59, 79) which are carried, on the one hand, by the main interface (5a) and, on the other hand, by said effectors (7a, 7b, 7c).

6. Equipment (1) according to one of the preceding claims, comprising:
- a main power supply system (9) which is configured to supply power to the main interface (5a), and
- at least one secondary power supply system (11, 13) for supplying power to said at least one secondary interface (5b, 5c).

7. Equipment (1) according to one of the preceding claims, wherein said power supply system (9; 11; 13) comprises a fixed support (91; 111; 131) carrying a supply panel and a supply conduit (93; 113; 133) of an associated interface (5a; 5b; 5c) which is configured to electrically and/or mechanically connect the supply panel to the associated interface (5a; 5b; 5c) .

8. Equipment (1) according to the preceding claim, wherein the fixed support (111, 131) of a power supply system (11, 13) of an associated secondary interface (5b, 5c) comprises a support arm comprising a holding and/or compensating mechanism for the supply conduit (113, 133).

9. Equipment (1) according to one of the preceding claims, comprising a control unit for the arm (33) which is configured to control the displacement of the arm (33) so as to move the main interface (5a) to an assembly station with the first effector (7a) or a secondary interface (5b, 5c), depending on the operation to be carried out.

10. Equipment (1) according to the preceding claim, wherein the control unit comprises at least one processing means which is configured to:
- determine a variation in load between at least two operational assemblies (7a; 5b, 7b; 5c, 7c) which are intended to be coupled to the main interface (5a) and which are associated with different operations, each operational assembly (7a; 5b, 7b; 5c, 7c) comprising at least one effector (7a; 7b; 7c), and to
- apply a corrective measure for compensating for a variation in load as a function of the operational assembly (7a; 5b, 7b; 5c, 7c) coupled to the main interface (5a), depending on the operation to be carried out.
